# EUROPEAN PATENT APPLICATION

(11) **EP 3 647 702 A1**
(43) Date of publication of application: **06.05.2020**
(21) Application number: 19201480.1
(22) Date of filing: 04.10.2019
(51) Int. Cl.: F27D 13/00, C22B 7/00, C22B 21/00, F27B 19/04, F27D 3/00

(54) **IN-LINE ALUMINUM SCRAP REMELTING DEVICE AND PROCESS**

(30) Priority: 31.10.2018 CN 201811288384
(71) Applicant: Citic Dicastal Co., Ltd., 066011 Quinhuangdao, Heibei (CN)
(72) Inventor: ZHANG, Zhiliang, Qinhuangdao, Hebei 066011 (CN); LU, Zhiqiang, Qinhuangdao, Hebei 066011 (CN); LIU, Yang, Qinhuangdao, Hebei 066011 (CN); LIU, Xinghua, Qinhuangdao, Hebei 066011 (CN)
(74) Representative: Gerauer, Marc Philippé

(57) **Abstract**

The invention discloses an on-line aluminum scrap remelting device, comprising an aluminum scrap conveying device, a primary aluminum scrap purification device, a remote aluminum scrap transport device, an ultimate aluminum scrap purification device, and a feed remelting device. The invention further discloses an on-line aluminum scrap remelting process, comprising: machined scrap removal, underground aluminum scrap transport collection, temporary storage, crushing, spin-drying, remote transport, secondary magnetic separation, drying, weighing, remelting, tempering, and use.

## Description

### Field of the Invention

The present invention relates to an on-line aluminum scrap remelting device, relating to the field of aluminum alloy casting production.

### Background of the Invention

The aluminum alloy casting manufacturing process includes aluminum alloy solution smelting, casting molding and machining, where the machining produces a large amount of aluminum scraps. At present, the machined aluminum scraps of most enterprises are sold, which causes a great waste in cost. The aluminum scraps in some enterprises are remelted. Since the aluminum scraps contain a large amount of emulsion, water and other impurities, the melting process produces a lot of dense smoke, and increases the hydrogen content and the slag content of the molten aluminum in the furnace, so that the quality of molten aluminum is uncontrollable. Therefore, an aluminum scrap remelting process is urgently needed to reduce the cost waste of an enterprise in raw materials while ensuring the quality of the molten aluminum.

### Summary of the Invention

In view of the above deficiencies in the prior art, the present invention provides an on-line aluminum scrap remelting device for on-line treatment and then remelting of machined aluminum scraps. The process can treat the aluminum scraps thoroughly to ensure the quality of molten aluminum, and can realize zero reproduction to greatly reduce the operating cost.

An on-line aluminum scrap remelting device comprises an aluminum scrap conveying device, a primary aluminum scrap purification device, a remote aluminum scrap transport device, an ultimate aluminum scrap purification device, and a feed remelting device.

The underground aluminum scrap conveying, collection and temporary storage link uses the aluminum scrap conveying device, a trench is arranged around a machining area, the aluminum scrap conveying device is arranged in the trench, each machining lathe scrap discharging machine is directly connected to the aluminum scrap conveying device, a temporary storage tank is arranged at the tail end of the aluminum scrap conveying device, and aluminum scraps are temporarily stored in the temporary storage tank.

The crushing and drying link uses the primary aluminum scrap purification device comprising an aluminum scrap crushing device, a spin dryer and scrap hoists, wherein the aluminum scrap crushing device comprises a primary coarse magnetic separator and an aluminum scrap crusher, a discharge port of the primary coarse magnetic separator is connected to a feed port of the aluminum scrap crusher, a scrap hoist is arranged between the temporary storage tank and the aluminum scrap crushing device, a discharge port of the temporary storage tank is correspondingly connected to a feed port at the lower end of the scrap hoist, and a discharge port at the upper end of the scrap hoist is correspondingly connected to a feed port of the primary coarse magnetic separator; a scrap hoist is arranged between the aluminum scrap crushing device and the spin dryer, a discharge port of the aluminum scrap crusher is correspondingly connected to the feed port at the lower end of the scrap hoist, and the discharge port at the upper end of the scrap hoist is correspondingly connected to a feed port of the spin dryer.

The remote transport uses the remote aluminum scrap transport device comprising a pneumatic mechanism and a transport pipe, the pneumatic mechanism adopts a venturi structure and comprises a blower, an air supply pipe, a discharge pipe and a vacuum chamber, and the remote aluminum scrap transport device remotely transports aluminum scraps to a melting equipment area.

The secondary magnetic separation and drying use the ultimate aluminum scrap purification device comprising a secondary magnetic separator and a rotary kiln, a feed port of the secondary magnetic separator is connected to a discharge port of the transport pipe of the remote aluminum scrap transport device, and a discharge port of the secondary magnetic separator is connected to a feed port of the rotary kiln.

The remelting uses the feed remelting device comprising a smelting furnace and a feed mechanism connected between a discharge port of the rotary kiln and the smelting furnace.

Further, the aluminum scrap conveying device is any one of an auger and a shark thorn.

Further, a scrap hoist is arranged between the aluminum scrap conveying device and the temporary storage tank.

Further, a blower outlet of the remote aluminum scrap transport device is connected with the air supply pipe, the end of the air supply pipe is reduced to form a nozzle, the vacuum chamber is arranged at the junction of the air supply pipe, a discharge pipe and the transport pipe, the axes of the starting ends of the air supply pipe and the transport pipe coincide to reduce the wind resistance, and the nozzle at the tail end of the air supply pipe is located at the bottom of a discharge port of the discharge pipe in the vacuum chamber.

Further, in the remelting device, a vortex well is arranged on one side of the smelting furnace, the end of the feed mechanism and the vortex well are correspondingly arranged, and the dried aluminum scraps or aluminum scrap blocks are directly immersed in the molten aluminum.

An on-line aluminum scrap remelting process comprises: machined scrap removal, underground aluminum scrap transport collection, temporary storage, crushing, spin-drying, remote transport, secondary magnetic separation, drying, weighing, remelting, tempering, and use.

The invention provides an on-line aluminum scrap remelting process adopting automatic continuous operation, where the machined aluminum scraps are treated thoroughly by crushing, spin-drying and various stages of purification and remelted, thereby greatly reducing the slag content of molten aluminum scrap, ensuring the quality of the molten aluminum, at the same time, realizing zero reproduction of aluminum scraps, and greatly reducing the operating cost.

### Brief Description of the Drawings

FIG. 1 is a diagram of a device according to the present invention.
FIG. 2 is a structure diagram of a pneumatic mechanism.

The Arabic numerals in the figures represent the following: 1 aluminum scrap conveying device, 2 scrap hoist, 3 storage tank, 4 scrap hoist, 5 primary coarse magnetic separator, 6 aluminum scrap crusher, 7 scrap hoist, 8 spin dryer, 9 pneumatic mechanism, 10 transport pipe, 11 secondary magnetic separator, 12 rotary kiln, 13 feed mechanism, 14 vortex well, 15 smelting furnace; 901 blower, 902 air supply pipe, 903 nozzle, 904 vacuum chamber, 905 discharge pipe.

### Detailed Description of Embodiments

The present invention will be further illustrated below in combination with specific embodiments and drawings.

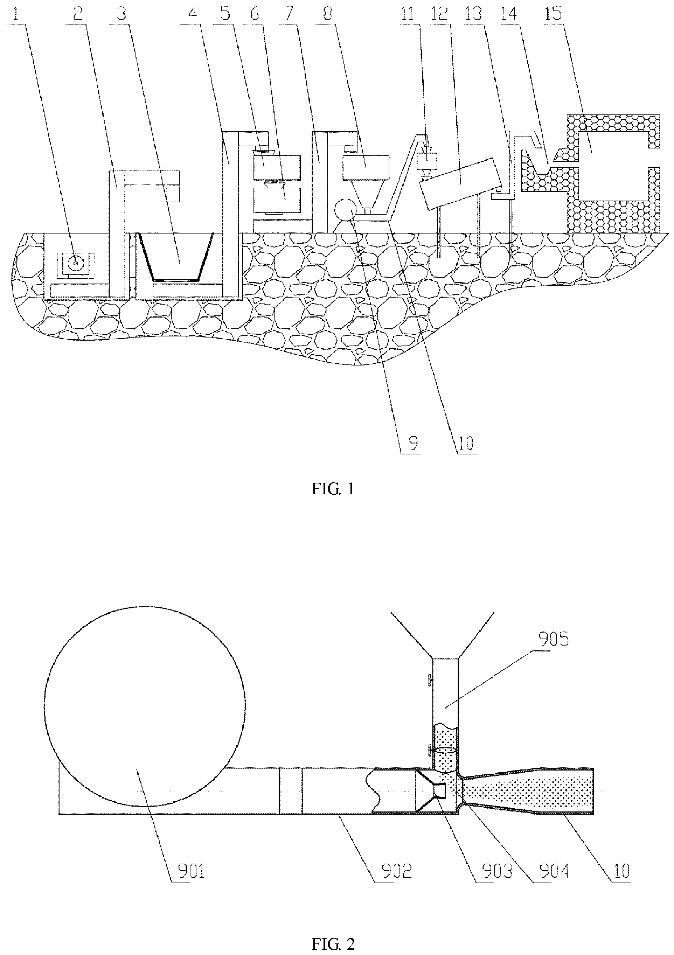

As shown in FIG. 1 and FIG. 2, an on-line aluminum scrap remelting device comprises an aluminum scrap conveying device, a primary aluminum scrap purification device, a remote aluminum scrap transport device, an ultimate aluminum scrap purification device, and a feed remelting device.

The underground aluminum scrap conveying, collection and temporary storage link uses the aluminum scrap conveying device, a trench is arranged around a machining area, the aluminum scrap conveying device 1 is arranged in the trench and is any one of an auger and a shark thorn, each machining lathe scrap discharging machine is directly connected to the aluminum scrap conveying device 1, a temporary storage tank 3 is arranged at the tail end of the aluminum scrap conveying device 1, aluminum scraps are temporarily stored in the temporary storage tank 3, and a scrap hoist 2 is arranged between the aluminum scrap conveying device 1 and the temporary storage tank 3.

The crushing and drying link uses the primary aluminum scrap purification device comprising an aluminum scrap crushing device, a spin dryer and scrap hoists, wherein the aluminum scrap crushing device comprises a primary coarse magnetic separator 5 and an aluminum scrap crusher 6, a discharge port of the primary coarse magnetic separator 5 is connected to a feed port of the aluminum scrap crusher 6, the scrap hoist 4 is arranged between the temporary storage tank 3 and the aluminum scrap crushing device, a discharge port of the temporary storage tank 3 is correspondingly connected to a feed port at the lower end of the scrap hoist 4, and a discharge port at the upper end of the scrap hoist 4 is correspondingly connected to a feed port of the primary coarse magnetic separator; the scrap hoist 7 is arranged between the aluminum scrap crusher 6 and the spin dryer 8, a discharge port of the aluminum scrap crusher 6 is correspondingly connected to the feed port at the lower end of the scrap hoist 7, and the discharge port at the upper end of the scrap hoist 7 is correspondingly connected to a feed port of the spin dryer 8.

The remote transport uses the remote aluminum scrap transport device comprising a pneumatic mechanism 9 and a transport pipe 10, the pneumatic mechanism 9 adopts a venturi structure and comprises a blower 901, an air supply pipe 902, a discharge pipe 905 and a vacuum chamber 904, the outlet of the blower 901 is connected to the air supply pipe 902, the end of the air supply pipe is reduced to form a nozzle 903, the vacuum chamber 904 is arranged at the junction of the air supply pipe 902, the discharge pipe 905 and the transport pipe 10, the axes of the starting ends of the air supply pipe 902 and the transport pipe 10 coincide to reduce wind resistance and save energy, and the nozzle 903 is located at the bottom of a discharge port of the discharge pipe 905 in the vacuum chamber 904.

The secondary magnetic separation and drying use the ultimate aluminum scrap purification device comprising a secondary magnetic separator 11 and a rotary kiln 12, a feed port of the secondary magnetic separator 11 is connected to a discharge port of the transport pipe 10 of the remote aluminum scrap transport device, and a discharge port of the secondary magnetic separator 11 is connected to a feed port of the rotary kiln 12.

The remelting uses the feed remelting device comprising a smelting furnace 15 and a feed mechanism 13 connected between a discharge port of the rotary kiln 12 and the smelting furnace 15, a vortex well 14 is arranged on one side of the smelting furnace 15, the end of the feed mechanism 13 and the vortex well 14 are correspondingly arranged, and the dried aluminum scraps or aluminum scrap blocks are directly immersed in the molten aluminum to reduce the burnout rate.

## Claims

1. An on-line aluminum scrap remelting device, **characterized in that** the device comprises an aluminum scrap conveying device, a primary aluminum scrap purification device, a remote aluminum scrap transport device, an ultimate aluminum scrap purification device, and a feed remelting device, wherein
the aluminum scrap conveying device indicates that a trench is arranged around a machining area, the aluminum scrap conveying device is arranged in the trench, each machining lathe scrap discharging machine is directly connected to the aluminum scrap conveying device, a temporary storage tank is arranged at the tail end of the aluminum scrap conveying device, and aluminum scraps are temporarily stored in the temporary storage tank;
the primary aluminum scrap purification device comprises an aluminum scrap crushing device, a spin dryer and scrap hoists, wherein the aluminum scrap crushing device comprises a primary coarse magnetic separator and an aluminum scrap crusher, a discharge port of the primary coarse magnetic separator is connected to a feed port of the aluminum scrap crusher, a scrap hoist is arranged between the temporary storage tank and the aluminum scrap crushing device, a discharge port of the temporary storage tank is correspondingly connected to a feed port at the lower end of the scrap hoist, and a discharge port at the upper end of the scrap hoist is correspondingly connected to a feed port of the primary coarse magnetic separator; a scrap hoist is arranged between the aluminum scrap crushing device and the spin dryer, a discharge port of the aluminum scrap crusher is correspondingly connected to the feed port at the lower end of the scrap hoist, and the discharge port at the upper end of the scrap hoist is correspondingly connected to a feed port of the spin dryer;
the remote aluminum scrap transport device comprises a pneumatic mechanism and a transport pipe, wherein the pneumatic mechanism adopts a venturi structure and comprises a blower, an air supply pipe, a discharge pipe and a vacuum chamber;
the ultimate aluminum scrap purification device comprises a secondary magnetic separator and a rotary kiln, a feed port of the secondary magnetic separator is connected to a discharge port of the transport pipe of the remote aluminum scrap transport device, and a discharge port of the secondary magnetic separator is connected to a feed port of the rotary kiln; and
the feed remelting device comprises a smelting furnace and a feed mechanism connected between a discharge port of the rotary kiln and the smelting furnace.

2. The on-line aluminum scrap remelting device according to claim 1, **characterized in that** the aluminum scrap conveying device is an auger.

3. The on-line aluminum scrap remelting device according to claim 1, **characterized in that** the aluminum scrap conveying device is a shark thorn.

4. The on-line aluminum scrap remelting device according to claim 1, **characterized in that** a scrap hoist is arranged between the aluminum scrap conveying device and the temporary storage tank.

5. The on-line aluminum scrap remelting device according to claim 1, **characterized in that** a blower outlet of the remote aluminum scrap transport device is connected with the air supply pipe, the end of the air supply pipe is reduced to form a nozzle, the vacuum chamber is arranged at the junction of the air supply pipe, a discharge pipe and the transport pipe, the axes of the starting ends of the air supply pipe and the transport pipe coincide, and the nozzle at the tail end of the air supply pipe is located at the bottom of a discharge port of the discharge pipe in the vacuum chamber.

6. The on-line aluminum scrap remelting device according to claim 1, **characterized in that** in the remelting device, a vortex well is arranged on one side of the smelting furnace, and the end of the feed mechanism and the vortex well are correspondingly arranged.

7. An on-line aluminum scrap remelting process, comprising machined scrap removal, underground aluminum scrap transport collection, temporary storage, crushing, spin-drying, remote transport, secondary magnetic separation, drying, weighing, remelting, tempering, and use.
